# EUROPÄISCHE PATENTSCHRIFT

(11) **EP 1 063 751 B1**
(45) Veröffentlichungstag und Bekanntmachung des Hinweises auf die Patenterteilung: **22.10.2008**
(21) Anmeldenummer: 99112013.0
(22) Anmeldetag: 22.06.1999
(51) Int. Cl.: H02K 5/22, H02K 11/00

(54) **Pumpenaggregat**
Pump unit
Unité de pompage

(43) Veröffentlichungstag der Anmeldung: 27.12.2000
(73) Patentinhaber: GRUNDFOS A/S, DK-8850 Bjerringbro (DK)
(72) Erfinder: Kristensen, Henning, DK-8600 Silkeborg (DK)
(74) Vertreter: Vollmann, Heiko

(56) Entgegenhaltungen:
- EP-A- 0 355 255
- DE-A- 3 342 967
- DE-A- 3 807 832
- DE-C- 4 435 510

## Beschreibung

Die Erfindung betrifft ein Pumpenaggregat gemäß den im Oberbegriff des Anspruches 1 angegebenen Merkmalen.

Pumpenaggregate dieser Art, insbesondere Umwälzpumpenaggregate, werden beispielsweise in Heizungsanlagen und dort insbesondere im Bereich der Brauchwasserförderung eingesetzt. Sie dienen beispielsweise dazu, das in einem Speicherbehälter befindliche und erwärmte Brauchwasser über eine Ringleitung den einzelnen Zapfstellen zuzuführen, so daß nicht erst der Leitungsweg vom Speicher bis zur Entnahmestelle durch warmes Wasser ersetzt werden muß. Da das Pumpen des warmen Wassers durch die Ringleitung stets mit Wärmeverlusten verbunden ist, ist es zweckmäßig, die Umwälzung nur dann einzuschalten, wenn voraussichtlich auch warmes Wasser an den Entnahmestellen benötigt wird, bei einem Privathaushalt beispielsweise in den Morgen- oder Abendstunden. Hierzu kann beispielsweise eine elektrische oder mechanische Schaltuhr vorgesehen sein, die als Schalt-einrichtung dient.

Ein derartiges Pumpenaggregat wird von der Anmelderin unter der Typenbezeichnung UP15-N vertrieben. Dabei ist auf dem Klemmenkasten eine Schalteinrichtung in Form einer elektromechanischen, von außen einstellbaren Uhr vorgesehen, die innerhalb des Klemmenkastens über Kabelverbindungen entsprechend angeschlossen ist. Die Einstellung der Zeitschalten erfolgt über ringförmig angeordnete Reiter, die rastend in eine von zwei möglichen Schaltpositionen bringbar sind und über die auf diese Weise die Ein- und Ausschaltzeiten des Pumpenaggregates eingebbar sind. Das Stellen der Uhr erfolgt durch Drehen des entsprechenden Ringes, auf dem die Reiter sitzen.

Ein vergleichbares Umwälzpumpenaggregat gleicher Bauart ist auch ohne Zeitschaltuhr verfügbar, dann ist anstelle der Zeitschaltuhr ein Klemmenkastendeckel auf dem Klemmenkasten angebracht. Eine Nachrüstung dieses ohne Schalteinrichtung vertriebenen Pumpentyps mit einer solchen Schalteinrichtung ist praktisch nicht möglich, da der Klemmenkasten hierzu geöffnet werden muß und die an der Schalteinrichtung vorgesehenen Kontakte über Drähte mit entsprechenden Kontakten im Klemmenkasten verbunden werden müssen. Diese Arbeiten können nur durch geschultes Fachpersonal durchgeführt werden, da die Kontakte im Klemmenkasten bei eingebautem und angeschlossenem Aggregat unter Netzspannung stehen und neben der Gefährdung durch elektrischen Schlag auch die Gefahr einer Verpolung besteht, was zu Kurzschluß und Zerstörung des gesamten Aggregates führen kann. Das Nachrüsten der Schalteinrichtung durch Fachkräfte ist häufig so aufwendig, daß ein kompletter Austausch des gesamten Aggregates kostengünstiger ist. Ein weiterer Nachteil dieses bekannten, mit einer Schaltuhr versehenen Pumpenaggregates ist, daß es je nach Einbaulage sehr schwierig einzustellen ist. Insbesondere bei Verwendung in Kompaktheizungsanlagen, in denen die Baugruppen auf engstem Raum anzuordnen sind, ist die Zugänglichkeit der Uhr nicht immer gewährleistet.

Vor diesem Hintergrund liegt der Erfindung die Aufgabe zugrunde, ein gattungsgemäßes Pumpenaggregat so auszubilden, daß es wahlweise mit oder ohne Schalteinrichtung betreibbar ist, wobei die jeweilige Ausrüstung nach Möglichkeit auch durch den Laien vorgenommen werden können soll. Darüber hinaus soll das Einstellen der Schalteinrichtung erleichtert werden.

Diese Aufgabe wird gemäß der Erfindung durch die in Anspruch 1 angegebenen Merkmale gelöst. Insbesondere die erleichterte Einstellbarkeit der Schalteinrichtung wird durch die in Anspruch 12 angegebenen Merkmale erreicht. Vorteilhafte Ausgestaltungen der Erfindung sind in den Unteransprüchen sowie der nachfolgenden Beschreibung angegeben.

Gemäß der Erfindung ist vorgesehen, das Aggregat so auszubilden, daß eine das Aggregat steuernde Schalteinrichtung aufsetzbar ist, wobei das Aggregat durch entsprechende Schaltmittel wahlweise mit aufgesetzter Schalteinrichtung oder auch ohne Schalteinrichtung betreibbar ist. Dabei erfolgt die Verschaltung so, daß bei aufgesetzter Schalteinrichtung diese selbsttätig in die Aggregatsteuerung eingegliedert ist, während bei abgenommener Schalteinrichtung das Aggregat ständig läuft oder durch andere Schalteinrichtungen gesteuert ist. Dabei sind gemäß der Erfindung im wesentlichen zwei Ausführungsvarianten vorgesehen, nämlich eine, bei der das Pumpenaggregat mit einem abnehmbaren Deckel versehen ist, der gegen die Schalteinrichtung austauschbar ist, und eine andere, bei der die Schalteinrichtung bei Bedarf direkt auf das Pumpenaggregat aufsetzbar ist.

Bei ersterer Variante ist im Deckel vorzugsweise eine Kurzschlußbrücke vorgesehen, welche bei aufgesetztem Deckel zwei aggregatseitige Gegenkontakte kurzschließt, die mit der Motorstromversorgung in Reihe geschaltet sind. An diese Kontakte schließt auch die Schalteinrichtung an, die damit auch schaltungstechnisch eingebunden ist. Bei dieser Variante kann das Aggregat so ausgebildet sein, daß es bei abgenommenen Deckel bzw. abgenommener Schalteinrichtung stehen bleibt, da die Stromversorgung unterbrochen ist. Hierdurch kann das Pumpenaggregat ohne gesonderten Schalter bei Bedarf auch durch den Laien stillgesetzt werden.

Alternativ kann das Aggregat auch so ausgebildet sein, daß eine beispielsweise durch zwei federnd aufeinanderliegende Kontakte leitende Brücke gebildet ist, die durch Aufstecken der Schalteinrichtung getrennt wird. Eine solche Anordnung ist insbesondere dann zweckmäßig, wenn auf einen Deckel verzichtet werden soll oder wenn das Aggregat bei abgenommener Schalteinrichtung weiterlaufen soll.

Bevorzugt ist die Ausgestaltung der Verbindung zwischen Schalteinrichtung und Pumpenaggregat so gewählt, daß ein Auf- bzw. Absetzen ohne Werkzeug möglich ist, also beispielsweise durch einfaches Aufstecken. Alternativ kann auch eine Schraubverbindung beispielsweise nach Art einer Überwurfmutter zwischen Schalteinrichtung und Aggregatgehäuse oder eine Bajonettverbindung vorgesehen sein.

Zweckmäßigerweise sind die gehäuseseitigen Kontakte so ausgebildet, daß die elektrische Sicherheit auch bei manuellem Zugriff stets gewährleistet ist. Deckel-bzw. schalteinrichtungsseitig gilt Entsprechendes, wobei dort in der Regel die Kontakte freiliegen können, es sei denn, daß im Bereich der Schalteinrichtung größere Kapazitäten oder vergleichbare aufladbare Energiespeicher vorgesehen sind, bei deren Berührung Gesundheitsgefahr besteht.

Eine Schalteinrichtung kann beispielsweise durch eine Schaltuhr gebildet sein, wobei diese mechanisch, elektrisch und/oder elektronisch arbeiten kann. Als Schalteinrichtung können jedoch auch Thermostatsteuerungen, Feuchtsensoren oder dergleichen vorgesehen sein. Die Schalteinrichtung kann auch zwischen Deckel und Gehäuse eingliederbar sein, so daß der vom Gehäuse abgenommene Deckel nach Aufsetzen der Schalteinrichtung auf dieser aufsteckbar ist. Auf diese Weise kann die Schalteinrichtung auch wieder entfernt werden, ohne daß die Gefahr besteht, daß der Deckel in der Zwischenzeit abhanden kommt. Zweckmäßigerweise sind sowohl Deckel als auch Schalteinrichtung aufsteckbar ausgestaltet, so daß sie durch einfaches Abziehen bzw. Aufstecken ohne Werkzeug am Aggregat handhabbar sind. Hierzu können beispielsweise am Deckel bzw. an der Schalteinrichtung zum Gehäuse hin weisende Rastzungen vorgesehen sein, die mit entsprechenden gehäuseseitigen Rastausnehmungen in Eingriff bringbar sind.

Während die Rastzungen in Verbindung mit den Rastausnehmungen die mechanische Verbindung zwischen Deckel und Schalteinrichtung bzw. Deckel und Gehäuse bzw. Schalteinrichtung und Gehäuse bilden, sind die elektrischen Verbindungen vorzugsweise durch deckelseitig bzw. schalteinrichtungsseitig zum Gehäuse hin vorspringende Kontakte gebildet, während die gehäuseseitigen Kontakte zurückspringend und somit zugriffsgeschützt angeordnet sind.

Bevorzugt wird als Deckel, der durch eine Schalteinrichtung ersetzbar ist, nicht der Deckel des Klemmenkastens des Pumpenaggregats gewählt, sondern ein gesonderter Deckel, vorzugsweise an der freien Stirnseite des Motorgehäuses. Hier können dann gezielt nur einige und wenige Kontakte geschützt vorgesehen sein, die zur Verbindung mit der Schalteinrichtung erforderlich sind. Nicht nur aus optischen Gründen ist es zweckmäßig, wenn das Gehäuse der Schalteinrichtung die Außenkontur des Motorgehäuse im wesentlichen fortsetzt. Dies erleichtert auch die Zugänglichkeit der Schalteinrichtung, insbesondere wenn das Motorgehäuse leicht konisch zulaufend ausgebildet ist, so daß die Bauteile in Aufsteckrichtung gesehen deutlich voneinander unterscheidbar und zuordbar sind, wobei die Konizität auch den zum Greifen erforderlichen Freiraum in engen Einbaulagen sicherstellt. Dabei sollte die Schalteinrichtung an der freien Stirnseite des Motorgehäuses aufsetzbar sein, da dies die vom Pumpengehäuse am weitesten entfernte Stelle ist, die in eingebautem Zustand regelmäßig am besten zugänglich ist.

Wenn die Schalteinrichtung eine eigene Spannungsversorgung benötigt, ist es zweckmäßig, die Kontaktverbindung zwischen Schalteinrichtung und Pumpenaggregat mindestens dreipolig auszubilden, wobei zwei dieser Kontaktverbindungen dann in Reihe mit einem Pol der Motorstromversorgung und der dritte parallel zum anderen Pol der Motorstromversorgung liegen sollte. Auf diese Weise steht innerhalb der Schalteinrichtung stets die Versorgungsspannung des Motors zur Verfügung.

Die Erfindung ist nachfolgend anhand eines in den Figuren dargestellten Ausführungsbeispieles näher erläutert. Es zeigen:
- Fig. 1: in schematischer perspektivischer Darstellung eine Ansicht eines Pumpenaggregates mit abgenommenen Deckel,
- Fig. 2: eine Ansicht des Pumpenaggregates gemäß Fig. 1 mit aufgesetzter Schalteinrichtung und
- Fig. 3: in vergrößerter Darstellung eine Ansicht der Schalteinrichtung schräg von hinten.

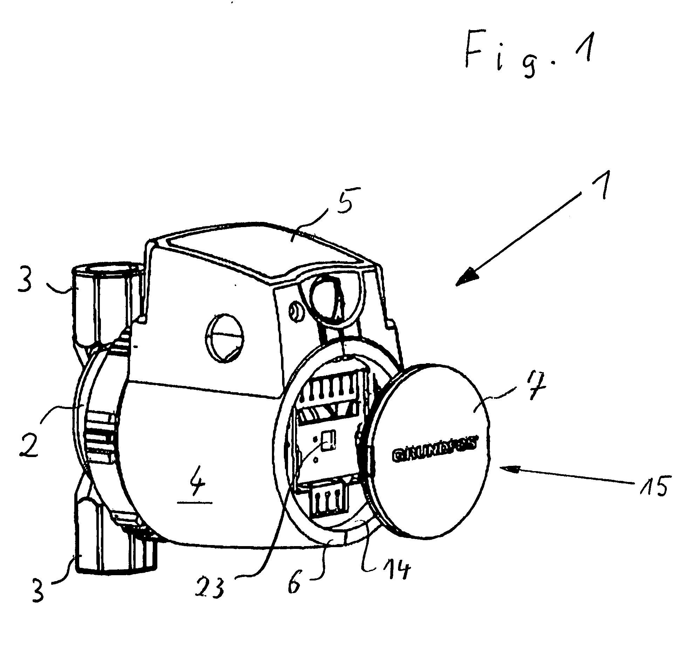

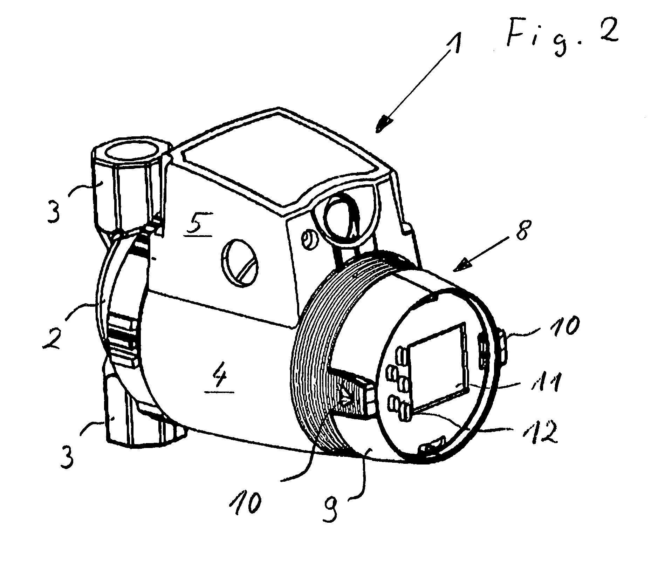

Das anhand von Fig. 1 und Fig. 2 dargestellte Pumpenaggregat 1 besteht im wesentlichen aus einer Kreiselpumpe, die von einem achsgleich dazu sitzenden Elektromotor angetrieben wird. In Fig. 1 ist das Pumpengehäuse 2 der Kreiselpumpe mit den beiden im wesentlichen quer zur Laufradachse angeordneten Leitungsanschlüssen 3 sichtbar. An das Pumpengehäuse 2 schließt sich ein Motorgehäuse 4 an, das in dem dargestellten Ausführungsbeispiel eine im wesentlichen kegelstumpfförmige Form hat. Seitlich am Motorgehäuse 4 sitzt ein Klemmenkasten 5, in dem die elektrische Verdrahtung zwischen Motor und dem Versorgungsnetz erfolgt und in dem gegebenenfalls weitere elektrische oder elektronische Bauteile integriert sein können.

Die vom Pumpengehäuse 2 abgewandte Stirnseite 6 des Motorgehäuses 4 ist mit einem Deckel 7 versehen, der rastend aufsteckbar ist und in aufgesteckter Stellung das Motorgehäuse 4 an seiner Stirnseite 6 abschließt.

Der Deckel 7 kann vom Motorgehäuse 4 durch Überwindung der Rastkraft abgezogen werden und durch eine Schalteinrichtung 8 ersetzt werden. In Fig. 2 ist eine solche aufgesetzte Schalteinrichtung 8 in Form einer elektronischen Schaltuhr dargestellt. Die Schalteinrichtung 8 weist ein Gehäuse 9 auf, das wie das Motorgehäuse 4 im wesentlichen kegelstumpfförmig ausgebildet ist und die Außenkontur des Motorgehäuses 4 über die Stirnseite 6 hinweg fortsetzt. Das Gehäuse 9 weist an seinem Außenumfang an zwei um 180° versetzt angeordneten Stellen Griffstücke 10 auf, die mit Daumen und Zeigefinger gefaßt werden können und mit denen die Schalteinrichtung 8 an der Stirnseite 6 des Pumpenaggregates 1 aufsteckbar bzw. abziehbar ist. Wie in Fig. 2 erkennbar, weist die Schalteinrichtung 8 an der freien Gehäusestirnseite ein Display 11 sowie Taster 12 zum Einstellen der Uhr und der Schaltzeiten auf. Die elektronische Uhr 8 ist mit einer Kondensatorbatterie ausgestattet, so daß die Uhr auch in abgenommenem Zustand zumindest eine gewisse Zeit weiterläuft. Die Uhr kann auch in abgenommenem Zustand gestellt werden kann, und zwar sowohl hinsichtlich der Zeit als auch hinsichtlich der Ein- und Ausschaltzeiten, was deren Handhabung wesentlich erleichtert.

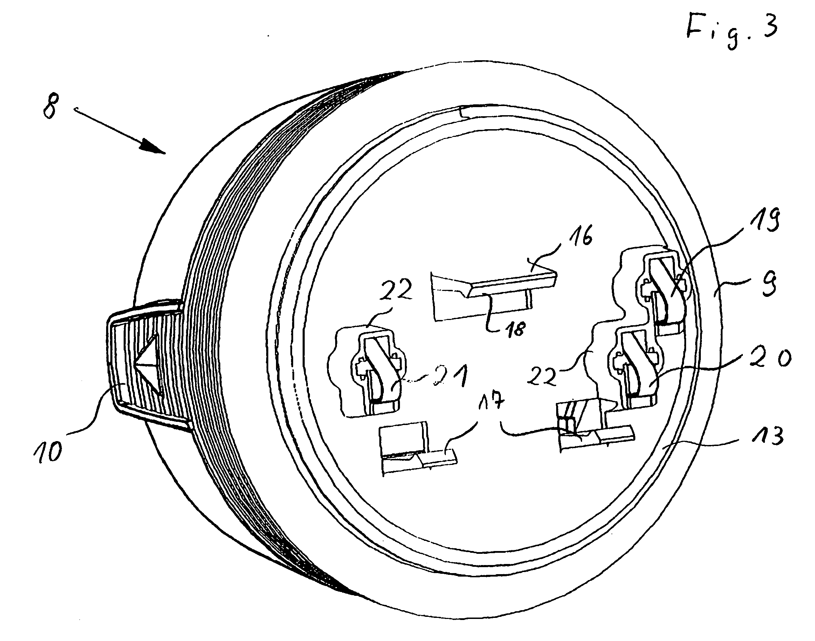

Auf der zur Stirnseite 6 des Motorgehäuses 4 weisenden Seite weist das Gehäuse 9 der Schalteinrichtung 8 einen zum Motorgehäuse 4 hin vorspringenden ringförmigen Vorsprung 13 auf, der in eine kreisförmige Ausnehmung 14 in der Stirnseite 6 des Motorgehäuses 4 eingreift. Dieser ringförmige Vorsprung 13 dient zum einen zur Führung beim Aufsetzen der Schalteinrichtung 8 auf das Motorgehäuse 4 und zum anderen als Formschlußsicherung in Querrichtung zur Aufsteckrichtung 15 und kann in weiterer Ausgestaltung auch als Dichtung dienen oder mit einer solchen versehen sein. Für die Rastverbindung zwischen Schalteinrichtung 8 und Pumpenaggregat 1 sind an der zum Motorgehäuse 4 weisenden Stirnseite der Schalteinrichtung 8, und zwar innerhalb des ringförmigen Vorsprungs 13 drei Rastzungen 16, 17 vorgesehen. Die Rastzungen 16, 17 sind genau wie der ringförmige Vorsprung 13 Teile des aus Kunststoffspritzguß bestehenden Gehäuses 9 der Schalteinrichtung 8. Die Zungen 16 und 17 erstrecken sich im wesentlichen in Aufsteckrichtung 15 und sind zum Eingriff in entsprechende in der Ausnehmung 14 in der Stirnseite 6 des Motorgehäuses 4 liegende (nicht dargestellte) Ausnehmungen vorgesehen. Die Zunge 16 ist etwa doppelt so breit wie die Zungen 17, in Querrichtung zur Längserstreckung federnd ausgebildet und weist einen zu den Zungen 17 gegenüberliegenden Rastkörper 18 auf, der im Querschnitt die gleiche im wesentliche dreieckige Form wie die in der Fig. 3 nicht bezifferten Rastkörper der schmalen Zungen 17 haben, die gegenüberliegend angeordnet sind. Die Rastkörper 18 hintergreifen in aufgestecktem Zustand die Ränder der entsprechenden motorseitigen Ausnehmungen und halten die Schalteinrichtung 8 am Motorgehäuse 4.

Innerhalb des ringförmigen Vorsprungs 13 sind weiterhin drei elektrisch leitende Kontakte 19, 20 und 21 vorgesehen, die federnd ausgebildet sind und die auf zum Motorgehäuse 4 ragenden Sockeln 22 angeordnet sind, gegenüber denen sie zum Motorgehäuse 4 hin vorstehen. Innerhalb der Ausnehmung 14 des Motorgehäuses 4 sind Vertiefungen 23 vorgesehen, in welche die Sockel 22 eingreifen und an deren Boden entsprechende (nicht dargestellte) Gegenkontakte vorgesehen sind. Eine solche Vertiefung 23 für den Kontakt 21 ist in Fig. 1 erkennbar. Die Sockel 22 sind mit dem übrigen Gehäuse 9 einstückig und elektrisch isolierend ausgebildet. Die Vertiefungen in der Ausnehmung 14 mit den bodenseitigen Kontakten sind so angeordnet, daß Griffsicherheit gegeben ist, d. h. daß auch bei unter Spannung stehenden Gegenkontakten bei manuellem Zugriff keine Gefahr der Berührung von spannungsführenden Teilen besteht. Die Beschaltung der Kontakte und Gegenkontakte erfolgt so, daß die Kontakte 19 und 20 in Reihe mit einem Pol, beispielsweise der Phase der Spannungsversorgung des Pumpenaggregats 1 liegen. Der Kontakt 21 hingegen liegt parallel zum anderen Pol, beispielsweise zum Nullleiter der Spannungsversorgung des Pumpenaggregats. Auf diese Weise liegen die Kontakte 19 und 21 stets an der Netzspannung an, worüber die elektrische Versorgung der Schalteinrichtung erfolgen kann. Der Kontakt 20 hingegen ist der Schaltkontakt, der bei eingeschalteter Uhr mit dem Kontakt 19 elektrisch leitend verbunden ist und damit die Stromversorgung zum Pumpenaggregat 1 herstellt. Bei ausgeschalteter Uhr ist diese Verbindung unterbrochen.

Der Deckel 7 ist auf seiner zum Motorgehäuse 4 hin weisenden Seite ebenfalls mit einem ringförmigen Vorsprung 13, mit Zungen 16 und 17 und entsprechenden Rastkörpern sowie mit Kontakten 19 und 20 versehen, wobei die Kontakte 19 und 20 deckelseitig ständig elektrisch leitend verbunden sind. Hierdurch wird sichergestellt, daß bei aufgesetztem Deckel 7 das Pumpenaggregat 1 mit dem Versorgungsnetz verbunden ist. Nach Abziehen des Deckels 7 bzw. der Schalteinrichtung 8 bleibt das Pumpenaggregat stehen, bis der Deckel 7 bzw. die Schalt-einrichtung 8 wieder aufgesetzt ist, wobei die Leitungsverbindung bei Aufsetzen der Schalteinrichtung 8 entsprechend der jeweiligen Schaltstellung erfolgt.

Das Gehäuse 9 kann so ausgebildet sein, daß der Deckel 7 an der vom Motorgehäuse 4 abgewandten Seite aufsetzbar ist. Der Deckel 7 schützt dann das dahinterliegende Display 11 sowie die Taster 12. Es versteht sich, daß dann die Anordnung von Zungen und Kontakten bzw. Ausnehmungen und Gegenkontakten entsprechend modifiziert ausgebildet sein muß.

Eine weitere (nicht dargestellte) bevorzugte Ausführungsvariante arbeitet ohne Deckel 7. Das Pumpenaggregat 1 ist dabei an der Stirnseite 6 des Motorgehäuses 4 ähnlich der anhand von Fig. 1 beschriebenen Ausführung ausgebildet, allerdings mit dem Unterschied, daß das Aggregat 1 zum normalen Betrieb (ohne Deckel) ausgelegt ist und lediglich an der Stirnseite 6 zugriffsicher und vertieft liegende Gegenkontakte aufweist, die zum elektrischen Eingliedern der von vorne aufsetzbaren Schalteinrichtung 8 vorgesehen sind. Die Umschaltung zwischen dem Normalbetrieb (ohne Schalteinrichtung) und dem Betrieb mit Schalteinrichtung erfolgt durch ein von der Stirnseite 6 zugängliches federkraftbeaufschlagtes Kontaktpaar, das innerhalb einer für die Zungen 16, 17 der Schalteinrichtung 8 vorgesehenen Ausnehmungen so angeordnet ist, daß die Kontaktverbindung durch die in die Ausnehmung eingeführte Zunge 16 oder 17 getrennt wird und statt dessen die Schalteinrichtung 8 elektrisch über ihre Kontakte 19 bis 21 eingegliedert wird. Bei dieser Ausführungsvariante ist kein Deckel vorgesehen, das Pumpenaggregat 1 kann wahlweise mit oder auch ohne Schalteinrichtung 8 betrieben werden. Auch bei dieser Ausführungsvariante ist die Schalteinrichtung 8 in abgenommenem Zustand einstellbar, allerdings mit dem Unterschied zu der Variante nach Fig. 2, daß das Pumpenaggregat bei abgenommener Schalteinrichtung weiterläuft.

### Bezugszeichenliste

- 1: Pumpenaggregat
- 2: Pumpengehäuse
- 3: Leitungsanschlüsse
- 4: Motorgehäuse
- 5: Klemmenkasten
- 6: Stirnseite von 4
- 7: Deckel
- 8: Schalteinrichtung
- 9: Gehäuse von 8
- 10: Griffstücke
- 11: Display
- 12: Taster
- 13: ringförmiger Vorsprung
- 14: Ausnehmung in 6
- 15: Aufsteckrichtung
- 16: breite Zunge
- 17: schmale Zungen
- 18: Rastkörper von 16
- 19: Kontakt
- 20: Kontakt
- 21: Kontakt
- 22: Sockel
- 23: Vertiefung

## Patentansprüche

1. Pumpenaggregat, insbesondere Umwälzpumpenaggregat, mit einem Elektromotor, einer davon angetriebenen Kreiselpumpe und mit einem Gehäuse (2, 4), **dadurch gekennzeichnet, daß** auf das Gehäuse (4) eine das Aggregat (1) steuernde Schalteinrichtung (8) aufsetzbar ist, wobei Schaltmittel (7) vorgesehen sind, welche dafür sorgen, daß das Aggregat bei vom Gehäuse (4) entfernter Schalteinrichtung (8) betreibbar ist.

2. Pumpenaggregat nach Anspruch 1, **dadurch gekennzeichnet, daß** die Schalteinrichtung (8) mindestens zwei Kontakte (19, 20, 21) aufweist, die in aufgesetztem Zustand der Schalteinrichtung (8) auf dem Gehäuse (4) mit entsprechenden Gegenkontakten des Aggregates (1) elektrisch leitend verbunden sind.

3. Pumpenaggregat nach Anspruch 1 oder 2, **dadurch gekennzeichnet, daß** die Schalteinrichtung (8) eine Schaltuhr ist.

4. Pumpenaggregat nach einem der vorhergehenden Ansprüche, **dadurch gekennzeichnet, daß** die Schaltmittel durch einen an Stelle der Schalteinrichtung (8) aufsetzbaren Deckel (7) gebildet sind, der in aufgesetztem Zustand zwei dahinter im Gehäuse (4) angeordnete Kontakte trennt oder vorzugsweise die Gegenkontakte im Gehäuse (4) kurzschließt.

5. Pumpenaggregat nach einem der vorhergehenden Ansprüche, **dadurch gekennzeichnet, daß** der Deckel (7) und/oder die Schalteinrichtung (8) aufsteckbar ausgebildet sind.

6. Pumpenaggregat nach einem der vorhergehenden Ansprüche, **dadurch gekennzeichnet, daß** an der zum Gehäuse (4) weisenden Seite von Deckel (7) und/oder Schalteinrichtung (8) Rastzungen (16, 17) vorgesehen sind, die mit entsprechenden Rastausnehmungen gehäuseseitig in Eingriff bringbar sind.

7. Pumpenaggregat nach einem der vorhergehenden Ansprüche, **dadurch gekennzeichnet, daß** die zum Gehäuse (4) hin gerichteten Kontakte (19, 20, 21) von Deckel (7) und/oder Schalteinrichtung (8) hervorstehend ausgebildet sind und daß die gehäuseseitigen Gegenkontakte zurückspringend und zugriffsgeschützt angeordnet sind.

8. Pumpenaggregat nach einem der vorhergehenden Ansprüche, **dadurch gekennzeichnet, daß** der Deckel (7) und/oder die Schalteinrichtung (8) an der freien Stirnseite (6) des Motorgehäuses (4) angeordnet sind/ist.

9. Pumpenaggregat nach einem der vorhergehenden Ansprüche, **dadurch gekennzeichnet, daß** die Schalteinrichtung (8) ein Gehäuse (9) aufweist, welches die Außenkontur des Motorgehäuses (4) im wesentlichen fortsetzt.

10. Pumpenaggregat nach einem der vorhergehenden Ansprüche, **dadurch gekennzeichnet, daß** der Deckel (7) an der vom Motorgehäuse (4) abgewandten Seite des Gehäuses (9) der Schalteinrichtung (8) aufsteckbar ist.

11. Pumpenaggregat nach einem der vorhergehenden Ansprüche, **dadurch gekennzeichnet, daß** zwischen Schalteinrichtung (8) und Pumpenaggregat (1) mindestens drei Kontaktverbindungen (19, 20, 21) vorgesehen sind, von denen zwei (19, 20) in Reihe mit einem Pol der Motorstromversorgung und der Dritte (21) parallel zum anderen Pol der Motorstromversorgung liegen.

12. Pumpenaggregat nach einem der vorhergehenden Ansprüche **dadurch gekennzeichnet, daß** die Schalteinrichtung (8) zum Zwecke des Einstellens vorzugsweise ohne Werkzeug abnehmbar und anschließend wieder aufsetzbar ist.

## Claims

1. A pump assembly, in particular a circulation pump assembly, with an electric motor, with a centrifugal pump driven thereby and with a housing (2, 4), **characterised in that** a switch device (8) controlling the assembly (1) may be applied onto the housing (4), wherein switch means (7) are provided, which ensure that the assembly may be operated when the switch device (8) is removed from the housing (4).

2. A pump assembly according to claim 1, **characterised in that** the switch device (8) comprises at least two contacts (19, 20, 21), which in the applied condition of the switch device (8) on the housing (4), may be connected to corresponding counter-contacts of the assembly (1) in an electrically conductive manner.

3. A pump assembly according to claim 1 or 2, **characterised in that** the switch device (8) is a switch clock.

4. A pump assembly according to one of the preceding claims, **characterised in that** the switch means are formed by a lid (7) which may be applied at the location of the switch device (8) and which in the applied condition separates two contacts arranged therebehind in the housing (4), or preferably short circuits the counter-contacts in the housing (4).

5. A pump assembly according to one of the preceding claims, **characterised in that** the lid (7) and/or the switch device (8) are designed such that they may be stuck on.

6. A pump assembly according to one of the preceding claims, **characterised in that** locking tongues (16, 17) are provided on the side of the lid (7) and/or of the switching device (8), said side facing the housing (4), and may be brought into engagement with the respective locking recesses on the housing side.

7. A pump assembly according to one of the preceding claims, **characterised in that** the contacts (19, 20, 21) of the lid (7) and/or of the switch device (8) and which are directed towards the housing (4), are designed in a projecting manner and that the counter-contacts on the housing side are arranged in a set-back manner and protected from access.

8. A pump assembly according to one of the preceding claims, **characterised in that** the lid (7) and/or the switching device (8) is/are arranged on the free end-side (6) of the motor housing (4).

9. A pump assembly according to one of the preceding claims, **characterised in that** the switch device (8) comprises housing (9) which essentially continues the outer contour of the motor housing (4).

10. A pump assembly according to one of the preceding claims, **characterised in that** the lid (7) may be stuck on the side of the housing (9) of the switch device (8), said side being distant to the motor housing (4).

11. A pump assembly according to one of the preceding claims, **characterised in that** at least three contact connections (19, 20, 21) are provided between the switch device (8) and the pump assembly (1), of which two (19, 20) lie in series with one pole of the motor electricity supply and the third (21) in parallel with the other pole of the motor electricity supply.

12. A pump assembly according to one of the preceding claims, **characterised in that** the switch device (8) may be removed and subsequently be applied again, preferably without a tool, for the purpose of the setting.

## Revendications

1. Unité de pompage, en particulier unité de pompe de circulation, comprenant un moteur électrique, une pompe centrifuge entraînée par celui-ci et un carter (2, 4), **caractérisée en ce qu'**un dispositif de commutation (8) pilotant l'unité (1) peut être monté sur le carter (4), des moyens de commutation (7) étant prévus pour permettre à l'unité de fonctionner lorsque le dispositif de commutation (8) est retiré du carter (4).

2. Unité de pompage selon la revendication 1, **caractérisée en ce que** le dispositif de commutation (8) présente au moins deux contacts (19, 20, 21) qui, à l'état monté du dispositif de commutation (8) sur le carter (4), sont reliés électriquement à des contacts complémentaires correspondants de l'unité (1).

3. Unité de pompage selon la revendication 1 ou 2, **caractérisée en ce que** le dispositif de commutation (8) est une horloge à contact.

4. Unité de pompage selon l'une des revendications précédentes, **caractérisée en ce que** les moyens de commutation sont formés par un couvercle (7) pouvant être monté en lieu et place du dispositif de commutation (8), qui, à l'état monté, isole deux contacts disposés en arrière dans le carter (4) ou, de préférence, court-circuite les contacts complémentaires dans le carter (4).

5. Unité de pompage selon l'une des revendications précédentes, **caractérisée en ce que** le couvercle (7) et/ou le dispositif de commutation (8) sont réalisés de manière à être enfichables.

6. Unité de pompage selon l'une des revendications précédentes, **caractérisée en ce que** sur le côté du couvercle (7) et/ou du dispositif de commutation (8) dirigé vers le carter (4) sont prévues des languettes d'encliquetage (16, 17) qui peuvent être mises en prise, côté carter, avec des évidements d'encliquetage correspondants.

7. Unité de pompage selon l'une des revendications précédentes, **caractérisée en ce que** les contacts (19, 20, 21) orientés vers le carter (4) sont réalisés en saillie par rapport au couvercle (7) et/ou au dispositif de commutation (8), et **en ce que** les contacts complémentaires côté carter sont disposés en retrait et avec un accès protégé.

8. Unité de pompage selon l'une des revendications précédentes, **caractérisée en ce que** le couvercle (7) et/ou le dispositif de commutation (8) est/sont disposé(s) sur la face frontale libre (6) du carter (4) du moteur.

9. Unité de pompage selon l'une des revendications précédentes, **caractérisée en ce que** le dispositif de commutation (8) présente un carter (9) qui prolonge sensiblement le contour extérieur du carter (4) du moteur.

10. Unité de pompage selon l'une des revendications précédentes, **caractérisée en ce que** le couvercle (7) peut être monté sur le côté du carter (9) du dispositif de commutation (8) opposé au carter (4) du moteur.

11. Unité de pompage selon l'une des revendications précédentes, **caractérisée en ce que** sont prévues entre le dispositif de commutation (8) et l'unité de pompage (1) au moins trois liaisons par contact (19, 20, 21) dont deux (19, 20) sont montées en série avec un pôle de l'alimentation électrique du moteur, et la troisième (21) est montée en parallèle par rapport à l'autre pôle de l'alimentation électrique du moteur.

12. Unité de pompage selon l'une des revendications précédentes, **caractérisée en ce que** le dispositif de commutation (8) peut, à des fins de réglage, être démonté, de préférence sans outil, et être ensuite réinstallé.
